Europäisches Patentamt

European Patent Office

Office européen des brevets

(11) Veröffentlichungsnummer: **0 464 519 A2**

# EUROPÄISCHE PATENTANMELDUNG

(21) Anmeldenummer: **91110265.5**

(22) Anmeldetag: **21.06.91**

(51) Int. Cl.5: **C01G 49/06**, G11B 5/706, C09C 1/24

(30) Priorität: **02.07.90 DE 4021014**

(43) Veröffentlichungstag der Anmeldung: **08.01.92 Patentblatt 92/02**

(84) Benannte Vertragsstaaten: **DE ES FR GB IT**

(71) Anmelder: **MERCK PATENT GESELLSCHAFT MIT BESCHRÄNKTER HAFTUNG Frankfurter Strasse 250 W-6100 Darmstadt(DE)**

(72) Erfinder: **Kniep, Rüdiger, Prof. Dr. Wupperstrasse 26a W-4018 Langenfeld(DE)**
Erfinder: **Schmitz, Karin Robert-Koch-Strasse 5 W-6070 Langen(DE)**
Erfinder: **Prengel, Constanze, Dr. Mainzer Strasse 14 W-6080 Weiterstadt(DE)**

(54) Verfahren zur Herstellung von nadelförmigem alpha-Eisen-III-Oxid.

(57) Die Erfindung betrifft ein Verfahren zur Herstellung von nadelförmigem $\alpha$-$Fe_2O_3$ durch Einleiten von Sauerstoff oder sauerstoffhaltigen Gasen in eine Alkali-Halogenoferrat(III)-Schmelze bei einer Temperatur der Schmelze von 400°-700°C.

F I G. 1

Die Erfindung betrifft ein Verfahren zur Herstellung von nadelförmigem $\alpha$-$Fe_2O_3$ durch Oxidation einer Alkali-Halogenferrat(III)-Schmelze.

Der stetig ansteigende Bedarf an Pigmenten für die Magnetaufzeichnungstechnik erfordert die ständige Entwicklung neuer und wirtschaftlicher Verfahren zur Herstellung von Magnetpigmenten. Die Pigmente können dabei nur als nadelförmige Teilchen eingesetzt werden. Unter den Eisenoxidpigmenten sind nach wie vor Magnetit und $\gamma$-$Fe_2O_3$ von großtechnischer Bedeutung. Bei den Herstellungsverfahren wird insbesondere darauf Wert gelegt, daß bei der Keimbildung der Eisenoxidpigmente bereits eine nadelförmige Phase entsteht. Ausgehend von Fe(II)- oder Fe(III)-Salzen wurden dabei bisher $\alpha$-FeOOH-Partikel (EP 45 028), $\beta$-FeOOH-Partikel (D. H. Rokhlenko et al. in IZV. Akad. Nauk SSSR, Neorg. Mater. 12(9), 1614-1617) und auch $\gamma$-FeOOH-Partikel als Ausgangsmaterial verwendet. Weitere Ausgangsprodukte sind beispielsweise $Fe(OH)_3$ (DE 3608540) oder das aus basischem Eisen(III)carbonat und Ammoniumcarbonat herstellbare und nadelförmig kristallisierende [-(FeO)$NH_4$]$CO_3$. Aus allen aufgezählten Ausgangsmaterialien läßt sich durch Erhitzen nadelförmiges $\alpha$-$Fe_2O_3$ herstellen, welches dann durch Reduktion unter Erhalt der Nadelform in Magnetit und daraus gegebenenfalls weiter in nadelförmiges $\gamma$-$Fe_2O_3$ umgewandelt werden kann.

Die Verfahren haben jedoch den Nachteil, daß zunächst aus kommerziell erhältlichen Eisenverbindungen Vorprodukte hergestellt werden müssen, die dann erst in nadelförmiges $\alpha$-$Fe_2O_3$ überführt werden können. Ein Verfahren zur Herstellung von nadelförmigem $\alpha$-$Fe_2O_3$ ohne den erwähnten Nachteil ist bisher nur von Ikeda et al. (Bull. Inst. Chem. Res., Kyoto Univ., 64(4), 249-58) durch Calcinieren einer Mischung von $Fe_2(SO_4)_3$ und NaCl unter bestimmten Reaktionsbedingungen gelungen.

Wir fanden nun überraschenderweise, daß nadelförmiges $\alpha$-$Fe_2O_3$ ebenfalls ohne die erwähnten Nachteile an einem Reaktionssystem erhalten werden kann, welches bisher nur zur Herstellung von plättchenförmigem $\alpha$-$Fe_2O_3$ beschrieben ist. Es handelt sich hierbei um die Oxidation von Alkali-Halogenoferrat(III)-Schmelzen mit Sauerstoff oder sauerstoffhaltigen Gasen (E. V. Carter, R. D. Laundon, FATIPEC Kongreß-Buch Aachen 1988, S. 73-91). Als Beispiel für diesen Prozeß dient folgende Reaktionsgleichung

$$4\ MFeCl_4 + 3\ O_2 = 2\ \alpha\text{-}Fe_2O_3 + 4\ KCl + 6\ Cl_2$$

(M = Alkalimetallkation, bsw. $Na^+$, $K^+$)

Führt man die Reaktion in abgegrenzten Temperaturbereichen und bei bestimmter Zudosierung des Oxidationsgases durch, so erhält man überraschenderweise das $\alpha$-$Fe_2O_3$ als nadelförmige Kristalle und nicht als plättchenförmige Partikel, wie sie unter anderen Reaktionsbedingungen auftreten. Dieses Verfahren hat gegenüber dem von Ikeda et al. den Vorteil, daß einerseits nur eine Anionensorte, nämlich Chlorid (KCl, $FeCl_3$) gegenüber Chlorid und Sulfat (Ikeda et al.: $Fe_2(SO_4)_3$, NaCl) auftritt, andererseits das als Beiprodukt auftretende Chlorgas zur einfachen Herstellung von Ausgangsstoff (2 Fe + 3 $Cl_2$ = 2 $FeCl_3$) wieder zurückgeführt werden kann. Im Ikeda-Verfahren entsteht dagegen Schwefeldioxid.

Gegenstand der Erfindung ist daher ein Verfahren zur Herstellung von $\alpha$-$Fe_2O_3$ durch Einleiten von Sauerstoff oder sauerstoffhaltigen Gasen in eine Alkali-Halogenoferrat(III)-Schmelze, dadurch gekennzeichnet, daß man bei einer Temperatur der Schmelze von 400°-700°C den Sauerstoff oder das sauerstoffhaltige Gas so zudosiert, daß das $\alpha$-$Fe_2O_3$ in der Nadelform gebildet wird.

Gegenstand der Erfindung ist weiterhin die Verwendung des erfindungsgemäß hergestellten nadelförmigen $\alpha$-$Fe_2O_3$ zur Herstellung von nadelförmigem Magnetit und nadelförmigem $\gamma$-$Fe_2O_3$.

Als Halogene sind insbesondere Chlor und Brom geeignet. Als Alkalimetallkationen können $Na^+$, $K^+$ und $Cs^+$ eingesetzt werden.

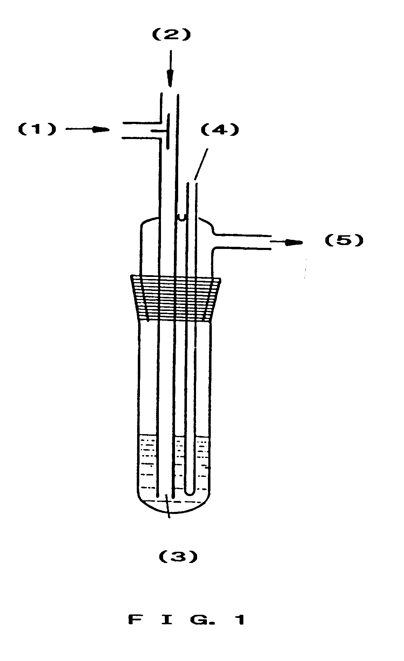

Die Reaktion wird zweckmäßigerweise wie folgt beschrieben, durchgeführt. In einem geeigneten Gefäß, beispielsweise einer Glove-Box, wird ein Eisen(III)halogenid und ein Alkalihalogenid (gleiches Halogen) unter Inertgas vermischt. Anschließend wird das Gemisch in das Reaktionsgefäß, beispielsweise nach Fig. 1, eingebracht.

Unter kontinuierlicher Inertgaseinleitung, beispielsweise $N_2$ (1), wird das Gemisch auf eine Temperatur zwischen 400° und 700°C erhitzt. Nach Erreichen der Temperatur (Führung für Thermoelement (4)) wird Sauerstoff oder ein sauerstoffhaltiges Gas (2), beispielsweise ein Sauerstoff/Intergas-Gemisch, in die Schmelze (3) eingeleitet. Bei der Reaktion entstandenes gasförmiges Halogen, z. B. Chlorgas, entweicht aus dem Gasaustrittsrohr (5).

Die Bildung von nadelförmigem $\alpha$-$Fe_2O_3$ hängt von der Zudosierung des Gases bei der gewählten Temperatur der Schmelze ab. Bei Reaktionstemperaturen, die im Bereich des Intervalls 400°-700°C liegen, ist eine hohe Sauerstoffzufuhr erforderlich. Hohe Ausbeuten an nadelförmigem $\alpha$-$Fe_2O_3$ werden dann erhalten, wenn die Zudosierung mit etwa 35 bis 90 ml $O_2$/min und pro mol Halogenoferrat(III) erfolgt. Durch einfaches Experimentieren kann dann mühelos für alle Temperaturen im angegebenen Intervall der optimale Wert für die Sauerstoffzufuhr gefunden werden.

Werden andere Gase, beispielsweise $O_2$/Inertgas-Gemische eingesetzt, so ist in der Regel die Zudosierung entsprechend dem Verdünnungsgrad zu erhöhen.

Die Reaktionsdauer hängt von den anderen Verfahrensparametern ab und beträgt in der Regel etwa 1 Stunde.

Die entstandenen $\alpha$-$Fe_2O_3$-Nadeln können anschließend in bekannter Weise durch Reduktion, beispielsweise mit $H_2$-Gas bei 500°-800°C, zu nadelförmigem Magnetit und gegebenenfalls weiter zum $\gamma$-$Fe_2O_3$ umgesetzt werden (z. B. JP-OS 49/43899).

Beispiel 1

12.4 g (76 mmol) $FeCl_3$ und 5,8 g (78 mmol) KCl werden unter Inertgasatmosphäre vermischt und in das Reaktionsgefäß gem. Fig. 1 eingebracht. Unter kontinuierlicher Stickstoffeinleitung wird das Gemisch auf etwa 650°C erhitzt. Danach wird langsam Sauerstoff in einer Dosierung von etwa 90 ml/min in die Schmelze eingeleitet. Nach ca. 70 min wird die Sauerstoffzufuhr unterbrochen und die Schmelze auf Raumtemperatur abgekühlt. Das Produkt wird mit kaltem vollentsalzenem (VE-)Wasser und anschließend mit Ethanol gewaschen und abschließend getrocknet.

**Patentansprüche**

1. Verfahren zur Herstellung von $\alpha$-$Fe_2O_3$ durch Einleiten von Sauerstoff oder sauerstoffhaltigen Gasen in eine Alkali-Halogenoferrat(III)-Schmelze, dadurch gekennzeichnet, daß man bei einer Temperatur der Schmelze von 400°- 700°C den Sauerstoff oder das sauerstoffhaltige Gas so zudosiert, daß das $\alpha$-$Fe_2O_3$ in der Nadelform gebildet wird.

2. Verfahren nach Anspruch 1, dadurch gekennzeichnet, daß man als Halogen Chlor verwendet.

3. Verfahren nach Anspruch 1 oder 2, dadurch gekennzeichnet, daß man als Alkakimetallkation $Na^+$ oder $K^+$ verwendet.

4. Verwendung von nach den Ansprüchen 1 bis 3 hergestelltem nadelförmigem $\alpha$-$Fe_2O_3$ zur Herstellung von nadelförmigem Magnetit.

5. Verwendung von nach den Ansprüchen 1 bis 3 hergestelltem nadelförmigem $\alpha$-$Fe_2O_3$ zur Herstellung von nadelförmigem $\gamma$-$Fe_2O_3$.

F I G. 1